# EUROPEAN PATENT APPLICATION

(11) **EP 4 568 334 A1**
(43) Date of publication of application: **11.06.2025**
(21) Application number: 23849407.4
(22) Date of filing: 01.08.2023
(51) Int. Cl.: H04W 24/10

(54) **CLI MEASUREMENT REPORT SENDING METHOD EXECUTED BY USER EQUIPMENT, AND USER EQUIPMENT**

(30) Priority: 03.08.2022 CN 202210927947
(71) Applicant: Sharp Kabushiki Kaisha, Sakai City, Osaka 590-8522 (JP)
(72) Inventor: LIU, Renmao, Pudong, Shanghai 201206 (CN); LIU, Lei, Pudong, Shanghai 201206 (CN)
(74) Representative: Müller Hoffmann & Partner
(86) International application number: PCT/CN2023/110533
(87) International publication number: WO 2024/027701

(57) **Abstract**

Provided in the present invention is a method for CLI measurement report transmission performed by a user equipment, including: when the user equipment is configured by a network to transmit a CLI measurement report on the basis of a CLI measurement event, determining, on the basis of a CLI measurement result acquired by performing CLI measurement, whether there is a CLI measurement resource satisfying an entering condition of the CLI measurement event among CLI measurement resources corresponding to the CLI measurement result; and when the number of CLI measurement resources satisfying the entering condition of the CLI measurement event reaches a numerical threshold for reporting, transmitting a CLI measurement report to the network, the CLI measurement report comprising indication information related to the CLI measurement resources satisfying the entering condition of the CLI measurement event.

## Description

### TECHNICAL FIELD

The present invention relates to the technical field of wireless communications. More specifically, the present invention relates to a method for CLI measurement report transmission performed by a user equipment which reduces CLI measurement reporting, and a corresponding user equipment.

### BACKGROUND ART

LTE Release 15 provides enhancements for uncrewed aerial vehicles to satisfy requirements for data transmission, mobility, etc. of uncrewed aerial vehicles.

At the RAN#94 plenary meeting in December 2021, a work item for NR support of Release 18 for uncrewed aerial vehicle functions was proposed and approved. Reference may be made to Non-Patent Document: RP-213600, New WID on NR support for UAV (Uncrewed Aerial Vehicles). One of the goals of this work item is to enhance measurement reports for the characteristics of uncrewed aerial devices. Possible enhancements specifically include: UE-triggered measurement report based on configured height thresholds; reporting of height, location and speed in the measurement report; flight path reporting; and measurement reporting based on a configured number of cells fulfilling triggering criteria of a measurement event simultaneously.

The present invention discusses how to reduce unnecessary reporting of CLI measurement reports by an uncrewed aerial vehicle device when NR supports uncrewed aerial vehicle functions, and how to set a measurement report when a height measurement event is supported.

### SUMMARY OF THE INVENTION

An objective of the present invention is to provide a method for CLI measurement report transmission capable of reducing CLI measurement reporting, and a corresponding user equipment.

According to an aspect of the present invention, provided is a method for CLI measurement report transmission performed by a user equipment, comprising: when the user equipment is configured by a network to transmit a CLI measurement report on the basis of a CLI measurement event, determining, on the basis of a CLI measurement result acquired by performing CLI measurement, whether there is a CLI measurement resource satisfying an entering condition of the CLI measurement event among CLI measurement resources corresponding to the CLI measurement result; and when the number of CLI measurement resources satisfying the entering condition of the CLI measurement event reaches a numerical threshold for reporting, transmitting a CLI measurement report to the network, the CLI measurement report comprising indication information related to the CLI measurement resources satisfying the entering condition of the CLI measurement event.

According to the present invention, the frequency of CLI report transmission can be reduced, thereby conserving air interface resources and reducing power consumption.

### BRIEF DESCRIPTION OF THE DRAWINGS

FIG. 1 is a flowchart of a method for CLI measurement report transmission according to an embodiment of the present invention.
FIG. 2 is an exemplary flowchart of a procedure of determining whether to transmit a CLI measurement report in a method for CLI measurement report transmission according to an embodiment of the present invention.
FIG. 3 is a flowchart of a method for CLI measurement report transmission according to a specific embodiment of the present invention.
FIG. 4 is a flowchart of a method for CLI measurement report transmission according to another specific embodiment of the present invention.
FIG. 5 is a simplified structural block diagram of a user equipment (UE) according to the present invention.

### DETAILED DESCRIPTION OF PREFERRED EMBODIMENTS

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

The following describes some terms involved in the present invention. For the specific meanings of the terms, please see the latest 3GPP standards and specifications.
UE: User Equipment
NR: New Radio
E-UTRA: Evolved Universal Terrestrial Radio Access
LTE: Long Term Evolution
MAC: Medium Access Control
MAC CE: MAC control element
RLC: Radio Link Control
SDAP: Service Data Adaptation Protocol
PDCP: Packet Data Convergence Protocol
RRC: Radio Resource Control
RRC_CONNECTED: RRC connected state
RRC_INACTIVE: RRC inactive state
RRC_IDLE: RRC idle state
RAN: Radio Access Network
AS: Access Stratum
IE: Information Element
CE: Control Element
MIB: Master Information Block
NR: New Radio
SIB: System Information Block
NG-RAN: NG Radio Access Network
DCI: Downlink Control Information
PHY: physical layer
RB: Radio Bearer
DRB: Data Radio Bearer
SRB: Signalling Radio Bearer
Uu: Uu
NAS: Non-Access Stratum
UAV: Uncrewed Aerial Vehicle
TDD: Time Division Duplex
CLI: Cross Link Interference
SRS: Sounding Reference Signal
RSSI: Received Signal Strength Indicator
RSRP: Reference Signal Received Power
RSRQ: Reference Signal Received Quality
SS: Synchronization Signal
PBCH: Physical Broadcast Channel
SSB: SS/PBCH block, Synchronization Signal/PBCH block
CSI-RS: Channel State Information Reference Signal
PCell: Primary Cell
SpCell: Special Cell

In the present invention, a network (or NW), a base station (or gNB or eNB), and a RAN may be used interchangeably. The network may be a Long Term Evolution (LTE) network, a new RAT (NR) network, an enhanced Long Term Evolution (eLTE) network, or another network defined in a subsequent evolved version of the 3GPP.

In the present invention, a user equipment (UE) may refer to an NR device that supports an NR UAV function as described in the Background Art, or an NR device or an LTE device of another type.

In the present invention, "feedback", "submit", "report", "send", "transmit", "transport" and "inform" may be used interchangeably. "Use", "be available", "apply", "implement", "enable", "active", "perform" and the like may be used interchangeably. "Associate", "correspond", and "map" may be used interchangeably.

In the present invention, "uncrewed aerial vehicle (UAV) UE", "aerial UE", "flying UE", and other names representing UE having uncrewed aerial vehicle functions may be used interchangeably.

In the present invention, "configure", "set", and "present" may be used interchangeably.

It should be noted that in the present specification, two items that are connected by "and", "or", or "and/or" may indicate different expression methods for the same intent in different application scenarios. It is possible that a relationship of including or being included in is present between the two items, but it is not necessary that the two items refer to completely different content.

Hereinafter, a description will be given of related art of the present invention.

### NR Measurement

A network performs measurement configuration on a UE in an RRC connected state by means of RRC dedicated signaling. The measurement configuration includes a configuration of a measurement object.

Measurement object: an object which needs to be measured by the UE. The network may configure a list of measurement objects to include a plurality of measurement objects. Configuration of the measurement object mainly includes: a time-frequency resource location and subcarrier spacing of a reference signal for measurement, measurement frequency information, etc. A measurement object is identified by a measurement object identity, and each measurement object corresponds to one measurement object identity.

Measurement report configuration: each measurement object may correspond to one or more report configurations, and the network may configure a list of report configurations to include a plurality of measurement report configurations. The measurement report configurations mainly include: a reporting criterion, a measurement event, a reference signal type, a report format, etc. A measurement report is identified by a measurement report identity, and each measurement report corresponds to one measurement report identity.

Measurement identity (ID): used to associate a measurement object identity (ID) with a measurement report identity (ID). Each measurement identity is associated with one measurement object identity and one measurement report identity. The network may configure a list of measurement identities to include a plurality of measurement identities.

Measurement quantity configurations: mainly including a measurement filter parameter configuration.

Measurement gap: a time period that the UE may use to perform measurement.

A list of allowed cells (allow-list) and/or a list of excluded cells (exclude-list) may be configured in the measurement object. A cell in the list of allowed cells is may be used for measurement event evaluation or a measurement report. That is, a cell in the list of allowed cells may be considered in the measurement event evaluation or the measurement report. A cell in the list of excluded cells may not be used for measurement event evaluation or a measurement report. That is, a cell in the list of excluded cells is not considered in the measurement event evaluation or the measurement report. In addition, an indication to use the list of allowed cells may be further configured in the measurement configuration. If the indication is set to TRUE, when the measurement report is triggered, the UE considers (one or more) detected neighbor cells included in the list of allowed cells. If the indication is set to FALSE, when the measurement report is triggered, (one or more) detected neighbor cells not included in the list of excluded cells are considered.

The type of the triggered measurement report may be configured in a measurement report configuration, including a periodically-triggered measurement report and an eventtriggered measurement report. For an event-triggered measurement report, the network configures an entering condition of the measurement report, that is, thresholds of RSRP/RSRQ, time, etc. When the condition is satisfied, the UE transmits the measurement report to the network. After transmitting a measurement report triggered by an event, the UE periodically reports to a base station measurement reports for the event a plurality of times. That is, after transmitting a measurement report triggered by a certain event, the UE starts a periodic report timer for a measurement ID associated with the event, and after the periodic report timer expires, reports the measurement report corresponding to the measurement ID associated with the event again.

If the measurement report type is set to *eventTriggered,* and if an entering condition is applicable to a certain measurement event, that is, one or more cells in all cell measurement results resulting from layer-3 filtering satisfy the entering condition of the event, the UE includes, in a triggered-cell list (*cellsTriggeredList*), the (one or more) cells which have triggered the event, also referred to as concerned cells, and initiates a measurement report procedure. If a triggered measurement event is related to a neighbor cell, for example, Event A3 (the quality of the neighbor cell is better than that of the SpCell, and exceeds a threshold), Event A4 (the quality of the neighbor cell exceeds a threshold), Event A5 (the SpCell is below a threshold 1 and the neighbor cell is above a threshold 2), etc., cells in *cellsTriggeredList* include the neighbor cell.

### CLI Measurement

Cross link interference (CLI) is that, when neighbor cells use different TDD uplink and downlink patterns, uplink transmission in one cell may interfere with downlink reception in another cell.

To mitigate CLI, a UE subject to interference may be configured by the network to perform CLI measurement. CLI measurement is performed on CLI measurement resources, and may include SRS-RSRP measurement and/or CLI-RSSI measurement. For SRS-RSRP measurement, the UE measures an RSRP value of an SRS resource from an interfering UE(s). For CLI-RSSI measurement, the UE measures total received power on a CLI-RSSI resource used to acquire an RSSI. By reporting of an SRS-RSRP measurement result and/or a CLI-RSSI measurement result, the network can learn the situation of interference to which the UE is subject, so as to make possible adjustments to the TDD uplink and downlink patterns of the cells to reduce the cross link interference. The SRS resource and the CLI-RSSI resources measured by the UE are configured by the network by means of a CLI measurement resource in an object to be measured for CLI. The CLI measurement report type (*reportType*) may be periodic or may be event-triggered (*cli-EventTriggered*), which is configured by the network.

A measurement event Event I1 (the interference exceeds a threshold) is used to determine whether to trigger a CLI measurement report. The entering condition of event I1 is: *Mi - Hys > Thresh.* The leaving condition of event I1 is: *Mi + Hys < Thresh. Mi* is an interference measurement result. *Hys* is a hysteresis parameter of event I1. *Thresh* is a threshold parameter of event I1.

If *reportType* is set to *cli-EventTriggered* (that is, the CLI measurement report is configured to be triggered on the basis of an event), and if the entering condition is applicable to the event (i.e., Event I1), that is, one or more CLI measurement resources among all measurement results resulting from layer-3 filtering satisfy the entering condition of the event, for the CLI measurement resource triggering the event, the UE includes in a CLI-triggered list (*cli-TriggeredList*) the (one or more) CLI measurement resources which have triggered the event, also referred to as concerned CLI measurement resources, and initiates a measurement report procedure.

### Height-Based Measurement

In LTE, in order to support uncrewed aerial vehicle devices, height-based measurements are introduced. Event H1 is the height of the uncrewed aerial vehicle UE being greater than a threshold, and Event H2 is the height of the uncrewed aerial vehicle UE being less than a threshold. When the height of the uncrewed aerial vehicle UE satisfies an entering condition of Event H1 or Event H2, the UE reports to the network a measurement report in which height information of the UE is included.

The entering condition of the measurement event Event H1 is: *Ms - Hys > Thresh + Offset,* and the leaving condition is: *Ms + Hys < Thresh + Offset.* The entering condition of Event H2 is: *Ms + Hys < Thresh + Offset,* and the leaving condition is: *Ms - Hys > Thresh + Offset. Ms* is the height of the uncrewed aerial vehicle UE. *Hys* is a hysteresis parameter. *Thresh* is a reference threshold of the event. *Offset* is an offset value that is relative to the reference threshold and is used to acquire an absolute threshold of the event.

The uncrewed aerial vehicle UE flies in the air at a certain height above the ground, and can therefore detect more CLI measurement resources than a UE on the ground. In addition, an entering condition and a leaving condition of a measurement event are more frequently satisfied, and CLI measurement reporting may therefore be triggered more frequently. Overly frequent CLI measurement reporting may waste air interface resources and consume power. In addition, for height-based measurement, the height information of the UE is reported when the height of the UE satisfies a threshold, regardless of the neighbor cell. Therefore, in this case, related processing by the UE on the neighbor cell is unnecessary, and unnecessary processing may result in an exception and a waste of computing resources.

The present invention discusses how to trigger measurement reporting reasonably and effectively. According to the present invention, a reporting condition for a measurement report can be set correctly according to a network configuration, and a measurement report is triggered when necessary, so that overly frequent or unnecessary reporting of CLI measurement reports is reduced, thereby conserving air interface resources and reducing power consumption. In addition, for height-based measurements, unnecessary processing on a neighbor cell is reduced, and exceptions are avoided.

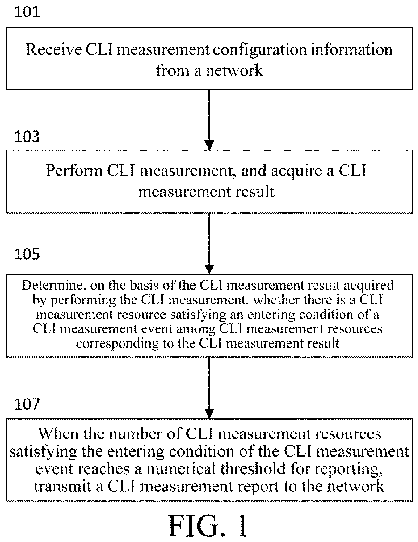

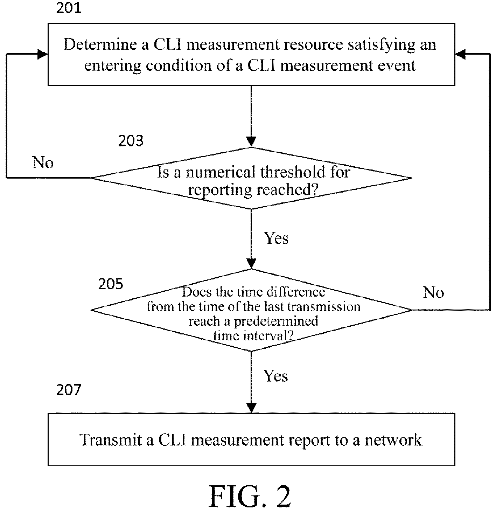

An outline of the embodiments of the present invention will be described below with reference to FIG. 1 and FIG. 2.

FIG. 1 is a flowchart of a method for CLI measurement report transmission according to an embodiment of the present invention.

As shown in FIG. 1, in 101, a user equipment receives CLI measurement configuration information from a network. The CLI configuration information includes a measurement configuration for performing CLI measurement. The measurement configuration may include a measurement object, a measurement event, a numerical threshold for reporting to be described later, etc. For details, reference may be made to the description of "CLI Measurement" in the foregoing.

Then, in 103, the user equipment performs CLI measurement on the basis of the received CLI measurement configuration information, and acquires a CLI measurement result. The CLI measurement result includes a result related to each measurement resource (i.e., each measured object).

Upon acquisition of the CLI measurement result, in 105, on the basis of the CLI measurement result acquired by performing the CLI measurement, it is determined whether there is a CLI measurement resource satisfying an entering condition of a CLI measurement event among CLI measurement resources corresponding to the CLI measurement result.

When the number of CLI measurement resources satisfying the entering condition of the CLI measurement event reaches a numerical threshold for reporting, in 107, a CLI measurement report is transmitted to the network. The CLI measurement report includes indication information related to the CLI measurement resources satisfying the entering condition of the CLI measurement event.

As an example, the indication information may include a list of CLI measurement resources satisfying the entering condition of the CLI measurement event. The user equipment may determine, for each CLI measurement resource, whether the CLI measurement result corresponding to the CLI measurement resource satisfies an entering condition of a CLI measurement event related to the measurement resource. In one example, when the measurement resource corresponding to the CLI measurement result satisfies the entering condition of the CLI measurement event, if the current number of CLI measurement resources in the list does not reach the numerical threshold for reporting, the CLI measurement resource is added to the list, and if the number of CLI measurement resources in the list reaches the numerical threshold for reporting after the CLI measurement resource is added to the list, the CLI measurement report is transmitted to the network.

In another example, alternatively, when the measurement resource corresponding to the CLI measurement result satisfies the entering condition of the CLI measurement event, the CLI measurement resource is added to the list, and if the number of CLI measurement resources in the list reaches the numerical threshold for reporting after the CLI measurement resource is added to the list, the CLI measurement report is transmitted to the network.

FIG. 2 is an exemplary flowchart of a procedure of determining whether to transmit a CLI measurement report in a method for CLI measurement report transmission according to an embodiment of the present invention.

As shown in FIG. 2, in 201, a user equipment determines a CLI measurement resource satisfying an entering condition of a CLI measurement event. In 203, the user equipment determines whether the number of CLI measurement resources satisfying the entering condition of the CLI measurement event reaches a numerical threshold for reporting.

If the number reaches the numerical threshold for reporting, in 205, it is determined whether the time difference between the current time and the time of the last transmission of the CLI measurement report reaches a predetermined time interval.

When the number of CLI measurement resources satisfying the entering condition of the CLI measurement event reaches the numerical threshold for reporting, and the time difference between the current time and the time of the last transmission of the CLI measurement report reaches the predetermined time interval, in 207, a CLI measurement report is transmitted to the network.

When the determination result of either one of 203 and 205 is "no", the process returns to 201 to then determine a new CLI measurement resource satisfying the entering condition of the CLI measurement event.

In addition, when it is determined that the number of CLI measurement resources satisfying the entering condition of the CLI measurement event reaches the numerical threshold for reporting, if the process returns to 201 because it is determined in 205 that the time interval does not reach the predetermined time interval, when a new CLI measurement resource satisfying the entering condition of the CLI measurement event is subsequently determined, 203 may be skipped, and the determination in 205 may be directly performed.

The numerical threshold for reporting may be configured with respect to different categories of CLI measurement resources. The categories of CLI measurement resources may include, for example, SRS resources and CLI-RSSI resources. In this case, when determining whether to transmit the CLI measurement report to the network, the user equipment, for the category of the CLI measurement resource corresponding to the measurement event, uses the numerical threshold for reporting corresponding to the category to perform the determination.

In this case, as one example, the network may not simultaneously configure numerical thresholds for reporting for two or more categories of measurement resources for the user equipment. In this case, when the network receives the CLI measurement report transmitted by the user equipment, according to the category of the CLI measurement resource corresponding to the numerical threshold for reporting configured for the user equipment, the network can learn which category of CLI measurement resources is related to the CLI measurement report transmitted by the user equipment.

It should be noted that even if the network configures the numerical threshold for reporting of only one category of CLI measurement resources for the user equipment, the user equipment may perform measurement related to two or more categories of CLI measurement resources. However, for a CLI measurement resource of a category for which a numerical threshold for reporting is not configured, even if the CLI measurement resource satisfies an entering condition of a corresponding measurement event, the user equipment temporarily does not transmit, to the network, a CLI measurement report related to the CLI measurement resource of the category. The user equipment may temporarily store the CLI measurement report related to the CLI measurement resource of the category, and may transmit the CLI measurement report to the network when the network configures for the user equipment the numerical threshold for reporting related to the CLI measurement resource of the category.

In another example, when the numerical threshold for reporting is configured with respect to different categories of CLI measurement resources, the network may also simultaneously configure numerical thresholds for reporting for two or more categories for the user equipment. In this case, the user equipment generates indication information on the basis of the numerical thresholds for reporting related to the corresponding categories, respectively, the indication information including category information related to the corresponding categories, and the indication information being classified according to the corresponding categories.

For example, when the categories of CLI measurement resources may include, for example, SRS resources and CLI-RSSI resources, and the network simultaneously configures, for the user equipment, a first numerical threshold for reporting related to SRS resources and a second numerical threshold for reporting related to CLI-RSSI resources, and when the SRS resource and the CLI-RSSI resource satisfy entering conditions of corresponding CLI measurement events, the user equipment adds corresponding measurement resources to lists of the corresponding categories (which are respectively an SRS resource list and a CLI-RSSI resource list), for the SRS resource and the CLI-RSSI resource, respectively. In addition, whether to transmit the CLI measurement report to the network may be determined on the basis of the numerical thresholds for reporting corresponding to the numbers of measurement resources in the lists of the corresponding categories. The CLI measurement report may include the SRS resource list and the CLI-RSSI resource list, and the list of each category has identification information indicating the category of the measurement resources.

Regardless of the number of measurement resources in the CLI-RSSI resource list, when the number of measurement resources in the SRS resource list reaches the first numerical threshold for reporting, the user equipment may transmit to the network the CLI measurement report including the SRS resource list. Moreover, regardless of the number of measurement resources in the SRS resource list, when the number of measurement resources in the CLI-RSSI resource list reaches the second numerical threshold for reporting, the user equipment may transmit to the network the CLI measurement report including the CLI-RSSI resource list. In addition, when the number of measurement resources in the SRS resource list reaches the first numerical threshold for reporting and the number of measurement resources in the CLI-RSSI resource list reaches the second numerical threshold for reporting, the user may also transmit to the network the CLI measurement report including the SRS resource list and the CLI-RSSI resource list. In addition, when either one of the number of measurement resources in the SRS resource list and the number of measurement resources in the CLI-RSSI resource list reaches the corresponding numerical threshold for reporting, the user may also transmit to the network the CLI measurement report including the SRS resource list and the CLI-RSSI resource list.

A network device may identify, on the basis of the identity of the received list, which category of measurement resources is related to the content of the measurement report.

In one example, for the SRS resource, the user equipment determines whether the entering condition of the CLI measurement event is configured on the basis of RSRP of an SRS. When the entering condition of the CLI measurement event is configured on the basis of the RSRP of the SRS, it is determined, on the basis of the numerical threshold for reporting related to the SRS resource, whether to transmit the CLI measurement report to the network, and if so, the CLI measurement report is transmitted to the network.

In another example, for the CLI-RSSI resource, the user equipment determines whether the entering condition of the CLI measurement event is configured on the basis of an RSSI of a CLI resource. When the entering condition of the CLI measurement event is configured on the basis of the RSSI of the CLI resource, it is determined, on the basis of the numerical threshold for reporting related to the CLI-RSSI resource, whether to transmit the CLI measurement report to the network, and if so, the CLI measurement report is transmitted to the network.

In this way, the frequency of reporting the CLI measurement report by the UE can be controlled more finely with respect to different radio performance of the SRS resource and the CLI-RSSI resource.

Hereinafter, several embodiments of the present invention for addressing the above problems are described in detail.

### Embodiment 1

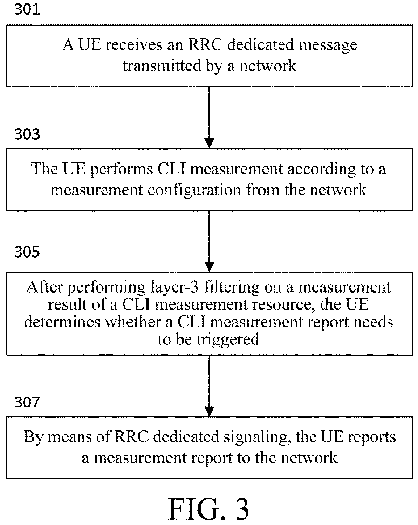

FIG. 3 is a flowchart of a method for CLI measurement report transmission according to a specific embodiment of the present invention.

Optionally, as shown in FIG. 3, in step 301, a UE receives an RRC dedicated message transmitted by a network, for example, an RRC reconfiguration (*RRCReconfiguration*) message, the message including a measurement configuration.

Optionally, the measurement configuration may include the number of CLI measurement triggering resources (for example: *numberOfTriggeringResources*), indicating that the UE triggers a CLI measurement report only when the number of CLI measurement resources satisfying an entering condition of a CLI measurement event reaches this number.

Optionally, in step 303, the UE performs CLI measurement according to a measurement configuration from the network.

Optionally, in step 305, after performing layer-3 filtering on a measurement result of a CLI measurement resource, the UE determines whether a CLI measurement report needs to be triggered.

The UE executes at least one of the following determination conditions:
- if a measurement object is a measurement object related to CLI;
- if a measurement report type is set to event-triggered *cli-eventTriggered* of a CLI measurement event (e.g., event I1);
- if an entering condition is applicable to a CLI measurement event, that is, one or more CLI measurement resources in CLI measurement resource measurement results resulting from layer-3 filtering satisfy the entering condition of the CLI measurement event; and
- if a corresponding report configuration (reportConfig) or a corresponding NR report configuration (reportConfigNR) includes the number of resources triggering CLI measurement.

If the UE satisfies at least one of the above determination conditions, at least one of the following operations is then performed:
- for the first CLI measurement resource that triggers the CLI measurement event, including a measurement report entry in a measurement report list variable;
- if the number of CLI measurement resources in the current CLI-triggered list is greater than or equal to *numberOfTriggeringResources,* including/adding, in the CLI-triggered list, the CLI measurement resource that triggers the CLI measurement event; optionally, after the periodic report timer expires, initiating a CLI measurement report procedure;
- otherwise (that is, when the number of CLI measurement resources in the CLI-triggered list is less than *numberOfTriggeringResources*), including/adding, in the CLI-triggered list, the CLI measurement resource that triggers the CLI measurement event, and if the number of CLI measurement resources in the CLI-triggered list is greater than or equal to *numberOfTriggeringResources* after the CLI measurement resource is added, setting the number of transmitted reports to 0, and initiating a CLI measurement report procedure; and
- including/adding, in the CLI-triggered list, the CLI measurement resource that triggers the CLI measurement event, and if the number of CLI measurement resources in the CLI-triggered list is greater than or equal to *numberOfTriggeringResources* after the CLI measurement resource is added, setting the number of transmitted reports to 0, and initiating a CLI measurement report procedure.

The CLI measurement resource that triggers the CLI measurement event may also be referred to as a concerned CLI measurement resource. The CLI measurement resource that triggers the CLI measurement event may be one or more CLI measurement resources.

The measurement report list variable is an internal variable of the UE, and includes measurement information that satisfies the entering condition.

Optionally, in step 307, by means of RRC dedicated signaling (e.g., a measurement report MeasurementReport message), the UE reports to the network a measurement report carrying a CLI measurement result.

### Embodiment 2

The general process of Embodiment 2 is similar to that of Embodiment 1. Embodiment 2 differs from Embodiment 1 only in details. The present embodiment will be described below, also with reference to the flowchart shown in FIG. 3.

In the present embodiment, a first CLI measurement resource refers to an SRS resource, and a second CLI measurement resource refers to a CLI-RSSI resource.

Optionally, in step 301, a UE receives an RRC dedicated message transmitted by a network (for example, an RRC reconfiguration *RRCReconfiguration* message), the message including a measurement configuration.

Optionally, the measurement configuration may include the number of resources triggering first CLI measurement and/or the number of resources triggering second CLI measurement, indicating that the UE triggers a CLI measurement report only when the number of first CLI measurement resources and/or the number of second CLI measurement resources satisfying an entering condition of a CLI measurement event reaches this number. For example, the number of resources triggering first CLI measurement refers to the number of CLI measurement resources triggering a CLI measurement event and based on an SRS, and the number of resources triggering second CLI measurement refers to the number of CLI measurement resources triggering a CLI measurement event and based on a CLI-RSSI resource.

Optionally, in step 303, the UE performs CLI measurement according to a measurement configuration from the network.

Optionally, in step 305, after performing layer-3 filtering on a measurement result of a CLI measurement resource, the UE determines whether a CLI measurement report needs to be triggered.

The UE executes at least one of the following determination conditions:
- if a measurement object is CLI-related;
- if a measurement report type is set to event-triggered *cli-eventTriggered* of a CLI measurement event (e.g., event I1);
- if an entering condition is applicable to a CLI measurement event, that is, one or more CLI measurement resources in CLI measurement resource measurement results resulting from layer-3 filtering satisfy the entering condition of the CLI measurement event; and
- if a triggering measurement quantity is set to RSRP of an SRS (i.e., the threshold *il-Threshold* of Event I1 is set to *srs-RSRP*), and a corresponding report configuration (reportConfig) or a corresponding NR report configuration (reportConfigNR) includes the number of resources triggering first CLI measurement; and
- if the triggering measurement quantity is set to an RSSI value of a CLI resource (i.e., the threshold *i1-Threshold* of Event I1 is set to *cli-RSSI*), and a corresponding report configuration or a corresponding NR report configuration includes the number of resources triggering second CLI measurement.

If the UE satisfies at least one of the above determination conditions, at least one of the following operations is then performed:
- 1) for the first CLI measurement resource that triggers the CLI measurement event, including a measurement report entry in a measurement report list variable;
- 2) if the number of CLI measurement resources in the CLI-triggered list is greater than or equal to the number of resources triggering first CLI measurement, including, in the CLI-triggered list, the CLI measurement resource that triggers the CLI measurement event;
- 3) otherwise (that is, when the number of CLI measurement resources in the CLI-triggered list is less than the number of resources triggering first CLI measurement), including/adding, in the CLI-triggered list, the CLI measurement resource that triggers the CLI measurement event, and if the number of CLI measurement resources in the CLI-triggered list is greater than or equal to the number of resources triggering first CLI measurement after the CLI measurement resource is added, setting the number of transmitted reports to 0, and initiating a CLI measurement report procedure;
- 4) including/adding, in the CLI-triggered list, the CLI measurement resource that triggers the CLI measurement event, and if the number of CLI measurement resources in the CLI-triggered list is greater than or equal to the number of resources triggering first CLI measurement after the CLI measurement resource is added, setting the number of transmitted reports to 0, and initiating a CLI measurement report procedure;
- 5) if the number of CLI measurement resources in the CLI-triggered list is greater than or equal to the number of resources triggering second CLI measurement, including, in a second CLI-triggered list, the second CLI measurement resource that triggers the CLI measurement event;
- 6) otherwise (that is, when the number of CLI measurement resources in the CLI-triggered list is less than the number of resources triggering second CLI measurement), including/adding, in the CLI-triggered list, the CLI measurement resource that triggers the CLI measurement event, and if the number of CLI measurement resources in the CLI-triggered list is greater than or equal to the number of resources triggering second CLI measurement after the CLI measurement resource is added, setting the number of transmitted reports to 0, and initiating a CLI measurement report procedure; and
- 7) including/adding, in the CLI-triggered list, the CLI measurement resource that triggers the CLI measurement event, and if the number of CLI measurement resources in the CLI-triggered list is greater than or equal to the number of resources triggering second CLI measurement after the CLI measurement resource is added, setting the number of transmitted reports to 0, and initiating a CLI measurement report procedure.

The CLI measurement resource that triggers the CLI measurement event may also be referred to as a concerned CLI measurement resource. The CLI measurement resource that triggers the CLI measurement event may be one or more CLI measurement resources.

The measurement report list variable is an internal variable of the UE, and includes measurement information that satisfies the entering condition.

Optionally, operations 2), 3) and 4) of the above operations are performed only when the triggering measurement quantity is set to an RSRP value of an SRS (i.e., the threshold *i1-Threshold* of Event I1 is set to *srs-RSRP*), and a corresponding report configuration (reportConfig) or a corresponding NR report configuration (reportConfigNR) includes the number of resources triggering first CLI measurement.

Optionally, operations 5), 6) and 7) of the above operations are performed only when the triggering measurement quantity is set to an RSSI value of a CLI resource (i.e., the threshold i1-Threshold of Event I1 is set to cli-RSSI), and a corresponding report configuration or a corresponding NR report configuration includes the number of resources triggering second CLI measurement.

Optionally, the CLI-triggered list may be divided into a first CLI-triggered list and a second CLI-triggered list. Operations 2), 3) and 4) of the above operations may be modified such that: "CLI-triggered list" is replaced with "first CLI-triggered list". That is, the first CLI measurement resource that triggers the CLI measurement event is included/added in the first CLI-triggered list. Optionally, operations 4), 5) and 6) of the above operations may be modified such that: "CLI-triggered list" is replaced with "second CLI-triggered list". That is, the second CLI measurement resource that triggers the CLI measurement event is included/added in the second CLI-triggered list.

Optionally, in step 307, by means of RRC dedicated signaling (e.g., a measurement report MeasurementReport message), the UE reports to the network a measurement report carrying a CLI measurement result.

### Embodiment 3

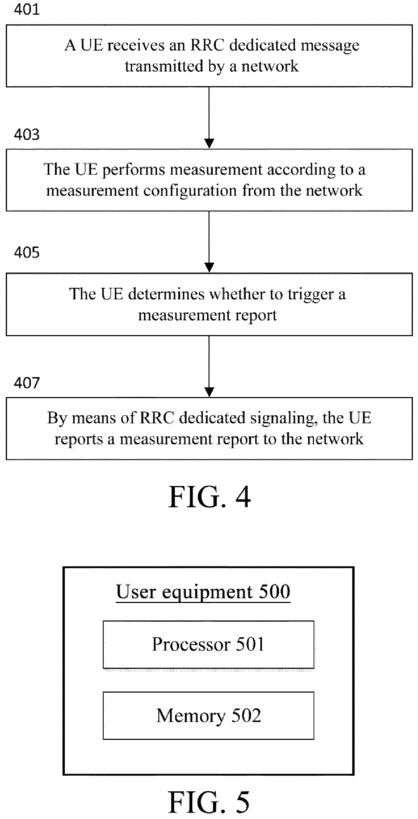

FIG. 4 is a flowchart of a method for height measurement report transmission according to another specific embodiment of the present invention. In this embodiment, for a measurement event related to height measurement, determination is not performed as to whether to consider a neighbor cell when a measurement report is transmitted, no measurement related to the neighbor cell is performed, and certainly, a measurement report transmission procedure related to the neighbor cell is not performed either. That is, only for a measurement event not related to measurement based on location information is determination performed as to whether to consider a neighbor cell when a measurement report is transmitted, and a measurement related to the neighbor cell is performed.

Optionally, as shown in FIG. 4, in step 401, a UE receives an RRC dedicated message transmitted by a network (for example, an RRC reconfiguration *RRCReconfiguration* message), the message including a measurement configuration.

Optionally, a measurement object in the measurement configuration includes a list of allowed cells (allow-list), and/or a list of excluded cells (exclude-list), and/or an indication to use the list of allowed cells.

Optionally, in step 403, the UE performs measurement according to the measurement configuration.

Optionally, in step 405, the UE determines whether to trigger a measurement report. For each measurement identity, if a corresponding report configuration includes a report type and the report type is set to event-triggered or periodically-triggered, and if a corresponding measurement object is NR-related, for measurement events other than event H1 or event H2, at least one of the following operations is performed:
- if an indication for the list of allowed cells is set to TRUE, if a neighbor cell is detected according to an associated configuration parameter for a NR measurement object and the neighbor cell is included in the list of allowed cells, then, when determining whether to trigger the measurement report, considering that the neighbor cell is applicable or considering the neighbor cell to be applicable;
- otherwise (that is, when the indication for the list of allowed cells is set to FALSE), if a neighbor cell is detected according to an associated configuration parameter for an NR measurement object and the neighbor cell is not included in the list of excluded cells, then, when determining whether to trigger the measurement report, considering that the neighbor cell is applicable or considering the neighbor cell to be applicable.

Optionally, in step 407, by means of RRC dedicated signaling (e.g., a measurement report MeasurementReport message), the UE reports to the network a measurement report.

If at least one neighbor cell needs to be reported, and if the report type is set to eventtriggered or periodically-triggered, a neighbor cell measurement result is set to include best neighbor cell(s) not exceeding the maximum number of reports. When setting the neighbor cell measurement result, at least one of the following operations is performed:
- if the report type is set to event-triggered and the event type is not set to event H1 or event H2, including cells in the triggered-cell list in the neighbor cell measurement result; and
- if the report type is set to event-triggered and the event type is set to event H1 or event H2, including no cells in the triggered-cell list.

FIG. 5 is a simplified structural block diagram of a user equipment (UE) according to the present invention. As shown in FIG. 5, the user equipment UE 500 includes a processor 501 and a memory 502. The processor 501 may include, for example, a microprocessor, a microcontroller, an embedded processor, and the like. The memory 502 may include, for example, a volatile memory (such as a random access memory (RAM)), a hard disk drive (HDD), a non-volatile memory (such as a flash memory), other memories, or the like. The memory 502 has program instructions stored thereon. When the instructions are run by the processor 501, the method performed by a user equipment described in detail in the present invention may be performed.

The program running on the device according to the present invention may be a program that enables a computer to implement the functions of the embodiments of the present invention by controlling a central processing unit (CPU). The program or information processed by the program may be temporarily stored in a volatile memory (for example, a random access memory (RAM)), a hard disk drive (HDD), a non-volatile memory (for example, a flash memory), or other memory systems.

The program for implementing the functions of the embodiments of the present invention may be recorded on a computer-readable recording medium. The corresponding functions may be achieved by reading programs recorded on the recording medium and executing the programs by a computer system. The phrase "computer system" herein may be a computer system embedded in the device, which may include operating systems or hardware (e.g., peripherals). The phrase "computer-readable recording medium" may refer to a semiconductor recording medium, an optical recording medium, a magnetic recording medium, a recording medium for programs that are dynamically stored for a short time, or any other recording medium readable by a computer.

Various features or functional modules of the device used in the above embodiments may be implemented or executed by circuits (for example, monolithic or multi-chip integrated circuits). Circuits designed to execute the functions described in this description may include general-purpose processors, digital signal processors (DSPs), application-specific integrated circuits (ASICs), field-programmable gate arrays (FPGAs) or other programmable logic devices, discrete gates or transistor logic, or discrete hardware components, or any combination of the above. The general-purpose processor may be a microprocessor, or may be any existing processor, controller, microcontroller, or state machine. The circuit may be a digital circuit or an analog circuit. When new integrated circuit technologies that replace existing integrated circuits emerge because of advances in semiconductor technology, one or a plurality of embodiments of the present invention may also be implemented using these new integrated circuit technologies.

Furthermore, the present invention is not limited to the embodiments described above. Although various examples of the embodiments have been described, the present invention is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present invention have been described in detail above with reference to the accompanying drawings. However, the specific structures are not limited to the above embodiments. The present invention also includes any design modifications that do not depart from the main idea of the present invention. In addition, various modifications can be made to the present invention within the scope of the claims. Embodiments resulting from appropriate combination of the technical means disclosed in the different embodiments are also included within the technical scope of the present invention. In addition, components with the same effect described in the above embodiments may be replaced with one another.

## Claims

1. A method for CLI measurement report transmission performed by a user equipment, comprising:
when the user equipment is configured by a network to transmit a CLI measurement report on the basis of a CLI measurement event, determining, on the basis of a CLI measurement result acquired by performing CLI measurement, whether there is a CLI measurement resource satisfying an entering condition of the CLI measurement event among CLI measurement resources corresponding to the CLI measurement result; and
when the number of CLI measurement resources satisfying the entering condition of the CLI measurement event reaches a numerical threshold for reporting, transmitting a CLI measurement report to the network, the CLI measurement report comprising indication information related to the CLI measurement resources satisfying the entering condition of the CLI measurement event.

2. The method according to claim 1, further comprising:
when the number of CLI measurement resources satisfying the entering condition of the CLI measurement event reaches the numerical threshold for reporting, and the time difference between the current time and the time of the last transmission of the CLI measurement report reaches a predetermined time interval, transmitting the CLI measurement report to the network.

3. The method according to claim 1, wherein the indication information comprises a list of CLI measurement resources satisfying the entering condition of the CLI measurement event, and the method further comprises:
for a CLI measurement resource satisfying the entering condition of the CLI measurement event among the CLI measurement resources corresponding to the CLI measurement result:
if the current number of CLI measurement resources in the list does not reach the numerical threshold for reporting, adding the CLI measurement resource to the list, and if the number of CLI measurement resources in the list reaches the numerical threshold for reporting after the CLI measurement resource is added to the list, transmitting the CLI measurement report to the network; or
adding the CLI measurement resource to the list, and if the number of CLI measurement resources in the list reaches the numerical threshold for reporting after the CLI measurement resource is added to the list, transmitting the CLI measurement report to the network.

4. The method according to any one of claims 1 to 3, wherein the numerical threshold for reporting is configured with respect to different categories of CLI measurement resources, and the network does not simultaneously configure numerical thresholds for reporting for two or more categories of measurement resources for the user equipment; or
the numerical threshold for reporting is configured with respect to different categories of CLI measurement resources; when the network configures numerical thresholds for reporting corresponding to two or more categories for the user equipment, the user equipment generates indication information on the basis of the numerical thresholds for reporting related to the corresponding categories, respectively, the indication information comprising category information related to the corresponding categories, and the indication information being classified according to the corresponding categories.

5. The method according to claim 4, wherein the indication information being classified according to the corresponding categories comprises:
the indication information comprising lists corresponding to the corresponding categories.

6. The method according to claim 4, wherein the categories of CLI measurement resources comprise SRS resources and CLI-RSSI resources.

7. The method according to claim 6, further comprising:
for the SRS resource, the user equipment determining whether the entering condition of the CLI measurement event is configured on the basis of RSRP of an SRS; and
when the entering condition of the CLI measurement event is configured on the basis of the RSRP of the SRS, determining, on the basis of the numerical threshold for reporting related to the SRS resource, whether to transmit a CLI measurement report to the network, and if so, transmitting the CLI measurement report to the network.

8. The method according to claim 6, further comprising:
for the CLI-RSSI resource:
determining, by the user equipment, whether the entering condition of the CLI measurement event is configured on the basis of an RSSI of a CLI resource; and
when the entering condition of the CLI measurement event is configured on the basis of the RSSI of the CLI resource, determining, on the basis of the numerical threshold for reporting related to the CLI-RSSI resource, whether to transmit a CLI measurement report to the network, and if so, transmitting the CLI measurement report to the network.

9. A user equipment, comprising:
a processor; and
a memory, having instructions stored therein,
wherein when the instructions are run by the processor, the method according to any one of claims 1 to 8 is performed.

10. The user equipment according to claim 9, wherein the user equipment is an uncrewed aerial vehicle.
